# EUROPÄISCHE PATENTSCHRIFT

(11) **EP 2 550 928 B1**
(45) Veröffentlichungstag und Bekanntmachung des Hinweises auf die Patenterteilung: **01.03.2017**
(21) Anmeldenummer: 11175226.7
(22) Anmeldetag: 25.07.2011
(51) Int. Cl.: A61C 13/20

(54) **Dentalofen mit einemTrocknungssensor**
Dental oven with a drying sensor
Four dentaire avec un capteur de séchage

(43) Veröffentlichungstag der Anmeldung: 30.01.2013
(73) Patentinhaber: Ivoclar Vivadent AG, 9494 Schaan (LI)
(72) Erfinder: Jussel, Rudolf, 6805 Feldkirch-Gisingen (AT); Kettner, Philipp, 6830 Rankweil (AT)
(74) Vertreter: Baronetzky, Klaus

(56) Entgegenhaltungen:
- US-A1- 2001 001 980
- US-A1- 2002 183 724
- US-B1- 6 386 865

## Beschreibung

Die Erfindung betrifft ein System zum Trocknen, insbesondere eines Dentalobjekts, nach Anspruch 1 sowie ein Trocknungsverfahren, insbesondere eines Dentalobjekts, nach Anspruch 12.

Für das Trocknen von Dentalrestaurationsteilen ist es seit langem bekannt, entweder separate Trocknungseinrichtungen mit Infrarotstrahlern zu verwenden, oder aber in Dentalöfen selbst die Feuchtigkeit zu entfernen.

Ein Beispiel für eine derartige Lösung lässt sich aus der GB 332 194 entnehmen. Bei dieser Lösung wird überprüft, ob nach 20 Minuten noch Feuchtigkeit abgegeben wird, indem überprüft wird, ob ein kalter Spiegel, der an eine Auslassöffnung gehalten wird, beschlägt.

Es sind auch spezielle Unterdruck-Entfeuchtungseinrichtungen für das Trocknen von Dentalrestaurationsteilen bekannt geworden, die mit Temperatursensoren arbeiten. Bei derartigen Lösungen können sowohl Unterdruck als auch Temperatur gemessen und angezeigt werden, und der Trocknungsvorgang kann nach Wunsch oder Vorschrift des Herstellers des Dentalrestaurationsteils eingestellt werden.

Ferner ist es auch bereits vorgeschlagen worden, ein Dentalrestaurationsteil während des Schließvorgangs eines Brennofens zu trocknen und hierbei den Schließvorgang so zu steuern, dass die Trocknungszeit ausreicht, jedoch nicht zu lange ist. Hierbei können auch mehrere Sensoren für die Ermittlung der Innenraumtemperatur des Dentalofens und weitere Sensoren eingesetzt werden.

Nachteilig bei den bekannten Lösungen ist es jedoch, dass sicherheitshalber stets eine bestimmte minimale Zeit eingehalten werden muss, um sicherzustellen, dass eine sichere Trocknung vorliegt. Insofern die beste Lösung bildet trotz ihres Alters noch die Lösung gemäß der genannten britischen Patentschrift, denn dort wird explizit die Feuchtigkeit im Ofeninneren als Kriterium für das Vorhandensein einer Restfeuchte eingesetzt.

Bei mehrgliedrigen Brücken, die aus Keramik einer bestimmten Porosität bestehen, können Feuchtigkeitsreste verbleiben, die die Qualität des Dentalrestaurationsteils während des Brennvorgangs erheblich mindern können. Ein Aufheizen eines insofern innen nassen Dentalrestaurationsteils, beispielsweise allein auf 700°C, würde zu Porositäten und/oder Defekten, wie z.B. Risse, führen, die dies sogar zerstören könnten.

Um dies sicher zu verhindern, haben sich heutzutage Trocknungsgeräte durchgesetzt, die häufig mit Infrarot-Trocknungslampen arbeiten oder als Trockenschränke ausgebildet sind. Hierbei wird das Dentalrestaurationsteil für eine längere Zeit wie z.B. eine Stunde auf eine erhöhte Temperatur gebracht, um den Trocknungsprozess zu beschleunigen. Damit dies auch bei z.B. großen Dentalrestaurationsteilen sichergestellt wird, wird experimentell eine Mindestzeit mit Sicherheitszuschlag vorgegeben. Diese Trocknungszeit gilt Einfachheitshalber auch für unterschiedliche z.B. kleine Objekte oder auch für Objekte, welche durch eine Liegezeit - Zeit zwischen zwei Verarbeitungsprozessen - eventuell schon trocknen werden.

US 6 386 865 B1 offenbart ein Verfahren und ein System, wonach die Temperatur des zu erwärmenden Objekts mit einer Probe simuliert wird.

Es versteht sich, dass die Verdampfungstemperatur lediglich bei reinem Wasser bei 100°C angesetzt werden kann. Salzhaltige Lösungen können eine Verdampfungstemperatur von wesentlich mehr als 100°C aufweisen, und alkoholhaltige Flüssigkeiten eine Verdampfungstemperatur von beispielsweise lediglich 80°C.

Demgegenüber liegt der Erfindung die Aufgabe zugrunde, eine Vorrichtung zum Trocknen eines feuchten Objekts, insbesondere eines Dentalrestaurationsteils, sowie ein entsprechendes Verfahren gemäß Anspruch 1 bzw. 12 zu schaffen, das zuverlässig eine hohe Qualität des Objekts, insbesondere des Dentalrestaurationsteils ermöglicht, ohne dass die Arbeitsabläufe beispielsweise in einem Dentallabor über Gebühr verlängert würden.

Diese Aufgabe wird erfindungsgemäß durch Anspruch 1 bzw. 12 gelöst. Vorteilhafte Weiterbildungen ergeben sich aus den Unteransprüchen.

Erfindungsgemäß besonders günstig ist es, dass ein Temperaturerfassungselement auf das Objekt, also insbesondere das Dentalrestaurationsteil, gerichtet ist und dessen Temperatur erfasst. In erfindungsgemäß besonders günstiger Weise lässt sich damit die Tatsache ausnutzen, dass das Objekt dann eine Temperatur im Bereich der Siedetemperatur der Flüssigkeit hat, wenn diese noch nicht vollständig verdampft ist. Auch wenn beispielsweise ein Temperaturgradient in dem Objekt besteht und das Objekt innen noch feucht ist, steigt die Temperatur während des Feuchtseins nicht über einen vorgegebenen Wert an.

Erfindungsgemäß lässt sich dieser Wert, der auch als "Auslösetemperaturwert" bezeichnet werden kann, vorab bestimmen, und erfindungsgemäß wird ein Signal an eine Steuervorrichtung abgegeben, wenn der Auslösetemperaturwert überschritten wird.

In weiterer, besonders bevorzugter Ausgestaltung ist es vorgesehen, die Steuervorrichtung in geeigneter Weise auszugestalten. Wenn die Trocknungsvorrichtung einen Trocknungsschrank oder eine Infrarotlampe zur Wärmebehandlung aufweist, kann die Steuervorrichtung diesen bzw. diese abschalten und signalisieren, dass das Dentalrestaurationsteil nunmehr fertig für den Brennvorgang ist. Wenn hingegen die Trocknungsvorrichtung einen Brennofen selbst aufweist, kann die Steuervorrichtung Teil des Brennofens sein, und dessen weitere Erwärmung starten, um umgehend den Brennzyklus vorzunehmen.

Die Signalabgabe kann insofern durch Abgabe eines elektrischen Signals realisiert sein, und/oder durch optische oder akkustische Signale. Es ist auch möglich, über eine Art Roboterarm die Dentalrestaurationsteile beim Auftreten des Signals von der Infrarotlampe in den Brennraum des Brennofens zu überführen und den Brennzyklus einzuleiten.

In erfindungsgemäß besonders günstiger Weise ist es vorgesehen, auch die Temperaturentwicklung des Objektes in Betracht zu ziehen: Wenn die gemessene Temperatur des Temperaturerfassungselements für eine gewisse Zeit im Wesentlichen konstant bleibt: Dieses Verhalten ergibt sich insbesondere bei mehrgliedrigen Brücken oder anderen großvolumigen Dentalrestaurationsteilen und ist darauf zurückzuführen, dass während noch Restfeuchte in dem Dentalrestaurationsteil verbleibt, dieses sich nicht über die Siedetemperatur hinaus erwärmt. Insofern kann auch die Temperaturentwicklung als Indikator herangezogen werden.

Besonders günstig ist es auch, wenn basierend auf dem Ergebnis der Messung durch das Temperaturerfassungselement die auf das Objekt einwirkende Wärmeenergie durch die Steuervorrichtung gesteuert wird. Hierdurch lässt sich eine Temperaturregelung, beispielsweise über einen PID-Regler, realisieren, und eine beliebige Aufheizkurve darstellen, und zwar bis die Siedetemperatur der Flüssigkeit in dem Objekt erreicht oder knapp überschritten ist.

In vorteilhafter Ausgestaltung ist es vorgesehen, dass anschließend an das Trocknen des Objekts, das ein Dentalrestaurationsteil, aber auch ein beliebiges anderes Dentalobjekt sein kann, nach dem Trocknen einer weiteren Wärmebehandlung unterzogen wird. Diese kann ein Brennen einer Dentalkeramik in einem Brennofen oder Pressofen sein, aber auch ein keramischer Grünling, der aus keramischen Partikeln und einer festen organischen Matrix besteht, welche Matrix wiederum aus mindestens einer organischen Verbindung bestehen kann.

Unter Siedetemperatur in Anspruch 1 ist insofern auch die Zersetzungstemperatur dieser organischen Verbindung zu verstehen.

Erfindungsgemäß günstig ist es, wenn beim Trocknen bzw. Zersetzen ein Temperaturplateau durchschritten wird. Dieses entsteht bei der Erwärmung größerer Dentalrestaurationsteile wie mehrgliedriger Brücken, oder aber auch bei der Entbinderung von organischen Matrizen. Für das Verdampfen der Flüssigkeit bzw. für das Zersetzen ist Wärmeenergie erforderlich, die dem Objekt entzogen wird, so dass trotz gleichbleibender Wärmezufuhr die Temperatur sich zunächst nicht weiter erhöht. Dieses Verhalten wird als Temperaturplateau bezeichnet und ist nutzbar, um festzustellen, dass die vollständige Zersetzung stattgefunden hat bzw. dass die Feuchtigkeit vollständig entfernt ist.

Derartige Temperaturplateaus können bei Alkoholen wie Ethanol oder Buthanol deutlich unter 100°C liegen, aber bei der Entbinderung organischer Matrizes bei etwa 500°C, wobei im letzten Fall nur eine kurze Flüssigphase entsteht und dann der Übergang in die Gasphase erfolgt. Dies ist insbesondere bei der Mikrowellen-gestützten Entbinderung bedeutsam und lässt sich erfindungsgemäß besonders gut ausnutzen.

Durch das Temperaturplateau wird praktisch die weitere Aufheizung des Objekts gleichsam automatisch zeitweilig verhindert. Dies wird von dem erfindungsgemäßen Temperaturerfassungselement erfasst. Insofern ist es wichtig, dass das Temperaturerfassungselement ausschließlich auf das Objekt gerichtet ist, und dessen Temperatur erfasst, insofern also unabhängig von der Einrichtung zur Erzeugung einer auf das Objekt einwirkenden Wärmeenergie.

Durch die Verdampfungswärme verbleibt die Temperatur des Objekts auf einer Temperatur etwas unterhalb der Siedetemperatur, und gegen Ende des Temperaturplateaus erfolgt ein deutliches Ansteigen der Temperatur des Objekts, dessen Temperaturgradient etwa dem Temperaturgradient vor Erreichen des Temperaturplateaus entspricht.

In einer ersten erfindungsgemäßen Ausgestaltung ist es vorgesehen, dass ein Trockenschrank oder ein Infrarotstrahler als Einrichtung zum Erzeugen einer auf das Objekt einwirkenden Wärmeenergie eingesetzt wird. Das Temperaturerfassungselement erfasst die Temperatur des Objekts an der Seite oder unten, bevorzugt jedenfalls an der Stelle, die nicht von einem Infrarotstrahler beaufschlagt wird. Wenn die Auslösetemperatur erreicht ist, wird der Trocknungsschrank oder die Infrarot-Strahlungsquelle abgeschaltet. Bei kleinen Dentalrestaurationsteilen ergibt sich kein Temperaturplateau; vielmehr wird nach Erfahrungswerten hierbei die Auslösetemperatur auf einen Wert etwas oberhalb der Siedetemperatur festgelegt.

Dies gilt sinngemäß auch für eine Entbinderungstemperatur, wobei typischerweise beim Entbindern Massen eingesetzt werden, die die Realisierung eines Temperatuplateaus ermöglichen.

Alternativ zu der genannten separaten Heizung über eine Infrarot-Lichtquelle oder einen Trocknungsschrank ist es auch möglich, einen Dentalbrennofen für das Trocknen einzusetzen. Bevorzugt wird ein solcher Dentalbrennofen eingesetzt, bei dem eine Brennkammer in einem Brennkammerkopf vorgesehen ist, der von einem Brennkammerboden abhebbar ist. Das Abheben kann durch eine reine translatorische Bewegung, aber auch über eine Schwenkbewegung, oder Kombinationen dieser Bewegungen erfolgen.

Das Dentalrestaurationsteil ist dann auf dem Brennkammerboden - bevorzugt über einen Brenngutträger - abgelegt, und zum Trocknen wird der Brennkammerkopf in eine teilweise geöffnete Position gebracht, in welcher sich ein Ringspalt zwischen dem Brennkammerboden und dem Brennkammerkopf erstreckt. Die Heizelemente des Brennkammerkopfes werden eingeschaltet, und die so abgegebene Wärme dient zur Trocknung des auf dem Brennkammerbodens befindlichen Dentalrestaurationsteils.

Die Steuervorrichtung kann dann entweder die Heizenergie des Dentalbrennofens steuern, oder aber auch die Position des Brennkammerkopfes. Je weiter der Brennkammerkopf nach oben bewegt wird, desto geringer wird die auf das Objekt einwirkende Wärmeenergie. Bei dieser Lösung ist insofern der Abstand zwischen der Wärmequelle und dem Objekt steuerbar; in beiden Fällen ist die auf das Objekt einwirkende Wärmeenergie durch die Steuervorrichtung regelbar.

In der halb geöffneten Position des Brennkammerkopfes lässt sich das Dentalrestaurationsteil auch gut auf den Brenngutträger aufbringen und bei Bedarf diesem entnehmen. Sobald das Dentalrestaurationsteil eingebracht ist, wird seine Temperatur kontinuierlich gemessen und erfasst. Wenn die Auslösetemperatur erreicht ist, beispielsweise eine Temperatur von gemessenen 105°C, wird der Brennkammerkopf kurzerhand abgesenkt. In diesem Zustand kann davon ausgegangen werden, dass sämtliche Feuchtigkeit aus dem Dentalrestaurationsteil entwichen ist.

Bei Bedarf kann das Entweichen auch durch eine Luftbeschleunigungsvorrichtung unterstützt und gefördert werden. Hierzu kann ein Lüfter eingesetzt werden, aber auch eine Absaugeinrichtung im Ofenkopf, die eine Luftströmung über das Objekt hinweg erzeugt.

Bei Bedarf kann auch bei Erreichen der Auslösetemperatur für kurze Zeit zugewartet werden, um eine Nachtrocknungszeit von einigen Sekunden zu realisieren, die auch der Temperaturvergleichmäßigung in dem Dentalrestaurationsteil dient. Sobald das weitere Aufheizen eingeleitet werden soll, wird das Heizelement auf volle Leistung eingeschaltet und die Brennkammer geschlossen. In diesem Zustand kann nach Schließen des Brennkammerkopfes dieser in an sich bekannter Weise gegen den Brennkammerboden abgedichtet werden, und in der Brennkammer wird ein Unterdruck erzeugt. Nachdem die Restfeuchte des Dentalrestaurationsteils bereits entfernt ist, lässt sich günstigerweise gleichsam automatisch verhindern, dass Wassertröpfchen in der Saugleitung für die Absaugung diese nach und nach zusetzen.

Hieran schließen sich die Vorteile der Unteransprüche an.

Erfindungsgemäß ist ein System nach Anspruch 1 und ein Verfahren nach Anspruch 12 vorgesehen.

Gemäß einer vorteilhaften Ausgestaltung ist es vorgesehen, dass das Signal das Ende des Trocknens signalisiert und/oder eine nachfolgende Wärmebehandlung des Objekts startet.

Gemäß einer vorteilhaften Ausgestaltung ist es vorgesehen, dass die Einrichtung zum Erzeugen der Wärmenergie von einer Wärmequelle gebildet ist, die Wärme mit einer Wellenlänge von 780 nm bis 15 µm emittiert.

Gemäß einer vorteilhaften Ausgestaltung ist es vorgesehen, dass die Einrichtung zum Erzeugen der Wärmeenergie eine Mikrowellenquelle aufweist.

Gemäß einer vorteilhaften Ausgestaltung ist es vorgesehen, dass die Einrichtung zum Erzeugen der Wärmeenergie von wenigstens einem Heizelement eines Dentalbrennofens gebildet ist, der einen Brennkammerkopf und einen Brennkammerboden aufweist, auf welchem das Objekt abgelegt ist, wobei der Brennkammerkopf zum Betrieb der Vorrichtung zum Trocknen bevorzugt um wenige Zentimeter von dem Brennkammerboden beabstandet ist, oder von einer Infrarotlichtquelle gebildet ist.

Gemäß einer vorteilhaften Ausgestaltung ist es vorgesehen, dass das Temperaturerfassungselement auf Strahlung mit einer Wellenlänge zwischen 780 nm und 1 mm, insbesondere zwischen 800 nm und 15 µm anspricht, und insbesondere außerhalb des mit Wärmeenergie beaufschlagten Bereichs angeordnet, jedoch auf diesen ausgerichtet ist.

Gemäß einer vorteilhaften Ausgestaltung ist es vorgesehen, dass die Einrichtung zum Erzeugen der Wärmeenergie von wenigstens einem Heizelement eines Dentalbrennofens gebildet ist und das Temperaturerfassungselement die Temperatur des Objekts durch einen Spalt hindurch erfasst, der zwischen einem Brennkammerkopf und einem Brennkammerboden gebildet ist, oder durch ein mit transparentem Glas abgedeckten Sichtkanal in dem Dentalbrennofen.

Gemäß einer vorteilhaften Ausgestaltung ist es vorgesehen, dass die Vorrichtung zum Trocknen einen Lüfter oder eine Luftbeschleunigungsvorrichtung aufweist, insbesondere die Einrichtung zum Erzeugen der Wärmeenergie oberhalb des Objekts, und/oder eine Absaugvorrichtung, über welche Luftströmung über das Objekt zur Unterstützung der Trocknung erzeugbar ist.

Gemäß einer vorteilhaften Ausgestaltung ist es vorgesehen, dass das Objekt als Dentalrestaurationsteil ausgebildet ist, das insbesondere eine Porosität aufweist und/oder aus einem Pulverhaufwerk besteht und insbesondere Keramik und/oder Metall und/oder Kunststoff oder Mischungen dieser Materialien aufweist.

Gemäß einer vorteilhaften Ausgestaltung ist es vorgesehen, dass das Objekt als Dentalrestaurationsteil ausgebildet ist, das ein keramischer Grünling ist, der aus keramischen Partikeln und einer festen organischen Matrix besteht, welche Matrix wiederum aus mindestens einer organischen Verbindung bestehen kann.

Gemäß einer vorteilhaften Ausgestaltung ist es vorgesehen, dass die Steuervorrichtung die Einrichtung zum Erzeugen der Wärmeenergie auf eine Temperatur regelt, die deutlich, insbesondere 30 bis 50° C, oberhalb der Siedetemperatur der Flüssigkeit ist.

Gemäß einer vorteilhaften Ausgestaltung ist es vorgesehen, dass das Signal die Wärmequelle zur Erzeugung einer auf das Objekt einwirkenden Wärmeenergie abschaltet.

Gemäß einer vorteilhaften Ausgestaltung ist es vorgesehen, dass die Steuervorrichtung mindestens ein Heizelement eines Dentalbrennofens einschaltet, der, insbesondere nach Schließen der Brennkammer, ein Dentalrestaurationsteil als Objekt einer weiteren Wärmebehandlung unterwirft.

Weitere Vorteile, Einzelheiten und Merkmale ergeben sich aus der nachfolgenden Beschreibung zweier Ausführungsbeispiele anhand der Zeichnung.

Es zeigen:
Fig. 1 eine schematische Ansicht einer erfindungsgemäßen Vorrichtung zum Trocknen in einer Ausführungsform der Erfindung; und
Fig. 2 eine weitere schematische Ansicht einer weiteren Ausführungsform einer erfindungsgemäßen Vorrichtung zum Trocknen.

Die erfindungsgemäß Vorrichtung 10 weist ein Objekt, insbesondere ein Dentalrestaurationsteil 12, auf, das im beispielsfalle als schematischer Quader dargestellt ist. Das Dentalrestaurationsteil 12 besteht aus Keramik und/oder Metall und/oder Kunststoff und ist porös. In dem Objekt ist eine Flüssigkeit enthalten, beispielsweise eine wässrige Restfeuchte, oder aber Reste einer Einfärbeflüssigkeit, die alkoholhaltig ist, so dass Ethanol oder Buthanol oder ähnliche Alkohole enthalten sind.

Als Einrichtung zum Erzeugen einer auf das Objekt einwirkenden Wärmeenergie ist bei diesem Ausführungsbeispiel eine Infrarot-Lichtquelle 14 vorgesehen, die von oben auf das Objekt 12 Wärme einwirken lässt. Ziel ist hierbei die Trocknung des Objekts, und die Infrarot-Lichtquelle 14 gibt die Infrarot-Lichtstrahlung im Wesentlichen kegelförmig ab. Insofern ergibt sich unterhalb des Strahlungskegels der Infrarot-Lichtquelle ein Beaufschlagungsbereich 16.

Wenn anstelle dessen ein Trocknungsschrank eingesetzt wird, ist der Beaufschlagungsbereich der gesamte Trocknungsschrank.

Das Objekt ist auf einer Unterlage 18 abgelegt. Durch die einwirkende Wärmeenergie wird es nach und nach erwärmt, in Abhängigkeit von seiner Wärmekapazität und der abgegebenen Wärmemenge.

Ein Temperaturerfassungselement 20 ist seitlich vorgesehen. Das Temperaturerfassungselement erfasst die Infrarotstrahlung, also Wärmestrahlung, des Objekts 12. Bevorzugt weist es eine Abschirmung 22 auf, die verhindert, dass das Temperaturerfassungselement 2 unmittelbar von der Infrarot-Lichtquelle 14 beaufschlagt wird. Zudem ist es außerhalb des Beaufschlagungsbereichs 16 angeordnet.

Das Temperaturerfassungselement 20 ist so ausgewählt, dass sein spektraler Empfindlichkeitsbereich zumindest den Infrarotbereich abdeckt. Es versteht sich, dass je nach Anwendungsfall auch ein größerer, zu längeren Wellenlängen hin verlagerter Bereich erfasst werden kann.

Das Temperaturerfassungselement 20 ist ferner an eine Steuervorrichtung 24 angeschlossen, die das Ausgangssignal des Temperaturerfassungselements empfängt und auswertet.

Wenn eine in Abhängigkeit von der Flüssigkeit in dem Objekt 12 gewählte und voreingestellte Auslösetemperatur erreicht ist, gibt die Steuervorrichtung 24 ihrerseits ein Signal ab, das in dem dargestellten Ausführungsbeispiel die Infrarot-Lichtquelle 14 abschaltet. Es versteht sich, dass anstelle dessen auch ein beliebiges anderes Signal erzeugt werden kann, beispielsweise auch ein Signal zur Überführung des nunmehr trockenen Dentalrestaurationsteils 12 in den Brennofen.

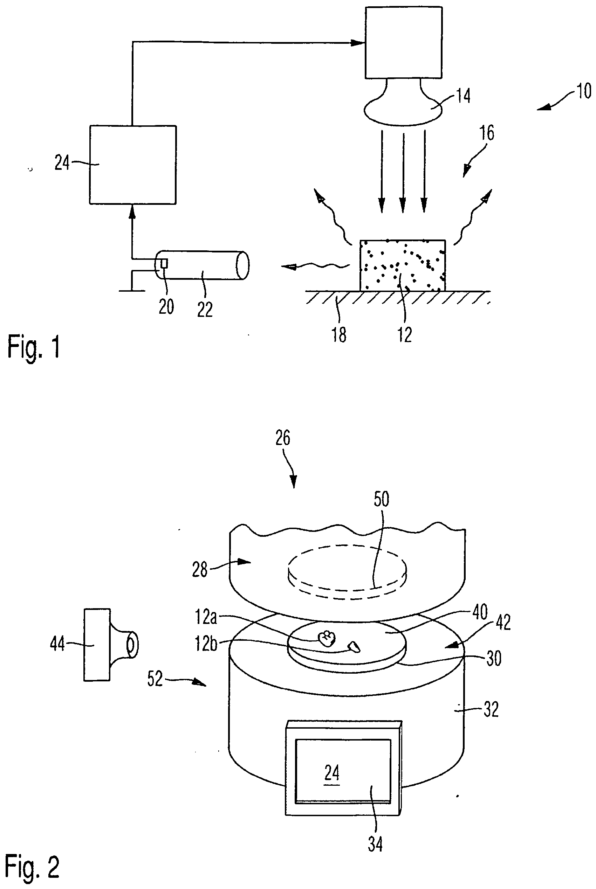

Eine andere Ausgestaltung einer erfindungsgemäßen Trocknungsvorrichtung ist aus Fig. 2 ersichtlich. Bei dieser Ausführungsform verwendet die Trocknungsvorrichtung 10 einen Dentalbrennofen 26. Der Dentalbrennofen weist einen Brennkammerkopf 28 und einen Brennkammerboden 30 auf, der auf einem Ofenunterteil 32 ausgebildet ist. Das Ofenunterteil 32 trägt weiterhin in an sich bekannter Weise einen Steuerbildschirm 34, über den auch die verschiedenen Funktionen und Zustände des Dentalbrennofens 26 anzeigbar sind, und über welchen dieser steuerbar ist.

Der Brennkammerboden 30 nimmt über einen Brenngutträger 40 Dentalrestaurationsteile auf, von denen in Fig. 2 zwei Dentalrestaurationsteile 12a und 12b dargestellt sind. Die Dentalrestaurationsteile können z.B. mehrgliedrige Brücken sein, aber auch einzelne Dentalrestaurationsteile mit geringer Masse.

Der Brennkammerkopf 26 ist über eine kombinierte Hub-/ Schwenk-Vorrichtung aufgehängt und hinsichtlich seiner Höhenposition steuerbar. In der dargestellten Position besteht ein Spalt 42 zwischen der Unterseite des Brennkammerkopfes und dem Brennkammerboden 30. Durch diesen hindurch ist das Dentalrestaurationsteil 12 seitlich sichtbar. Als Temperaturerfassungselement ist in diesem Ausführungsbeispiel eine Wärmebildkamera 44 vorgesehen, die seitlich des Spalts 42, jedoch von diesem beabstandet, befestigt ist, und die in ihrer Optik auf das oder die Dentalrestaurationsteile 12 ausgerichtet ist.

Die Wärmbildkamera 44 ist seitlich von dem heißen Dentalbrennofen so weit beabstandet, dass sie nicht durch die Wärmestrahlung geschädigt wird.

In dem dargestellten Ausführungsbeispiel ist in an sich bekannter Weise in dem Brennkammerkopf ein Heizelement 50 als umlaufende elektrische Widerstandsheizung ausgebildet. Die von dem Heizelement abgegebene Wärme erwärmt auch über den Spalt 42 hinweg das Dentalrestaurationsteil 12, so dass das Heizelement als Einrichtung zum Erzeugen einer auf das Objekt einwirkenden Wärmeenergie angesehen werden kann. Das Ausmaß der dort eingebrachten Wärmeenergie hängt stark von der Höhenposition des Brennkammerkopfes ab, und natürlich auch von der Heizleistung des Heizelements 50 bzw. der Wärmeenergie, die in der Isolation des Brennkammerkopfes gespeichert ist.

Erfindungsgemäß ist die Wärmebildkamera 44, beispielsweise über eine drahtlose Datenverbindung 52, mit der Steuervorrichtung 24 verbunden. Die Steuervorrichtung 24 wird hierdurch über die Temperatur des Dentalrestaurationsteils 12 informiert.

Wenn die voreingestellte Auslösetemperatur erreicht ist, geht die Steuervorrichtung 24 davon aus, dass die Restfeuchte in dem Dentalrestaurationsteil entwichen ist. Das Dentalrestaurationsteil ist insofern zu diesem Zeitpunkt fertig vorgetrocknet.

Zum Einleiten des eigentlichen Brennzykluses wird dann der Brennkammerkopf 28 in an sich bekannter Weise abgesenkt, so dass er gegenüber dem Brennkammerboden 30 abdichtet. Der Brennzyklus wird in ebenfalls an sich bekannter Weise - gegebenenfalls unter Unterdruck - vollzogen.

Typischerweise wird der Brennzyklus von einer Abkühlungsphase abgeschlossen, die zweckmäßigerweise ebenfalls bei halb geöffnetem Brennkammerkopf realisiert ist. Auch in dieser Position kann die erfindungsgemäße Wärmebildkamera 44 wiederum die Temperatur der Dentalrestaurationsteile 12 erfassen und überwachen und ermöglicht so das exakte Durchfahren eines vorgegebenen Temperaturprofils auch während der Abkühlphase.

## Patentansprüche

1. System mit einer Vorrichtung zum Trocknen wenigstens eines eine Flüssigkeit aufweisenden Objektes, insbesondere eines Dentalrestaurationsobjekts (12), und dem Objekt,
wobei die Vorrichtung eine Einrichtung zum Erzeugen einer auf das Objekt einwirkenden Wärmeenergie, die zur Erhöhung der Temperatur des Objekts auf die Siedetemperatur der Flüssigkeit ausreicht, einen Beaufschlagungsbereich für die Beaufschlagung des Objekts mit Wärmeenergie, und eine Steuervorrichtung (24) aufweist, wobei ein Temperaturerfassungselement (20) der Vorrichtung (10) ausgebildet ist, die Temperatur des Objekts (12) zu messen und beim Erreichen einer Auslösetemperatur, die etwas oberhalb der Siedetemperatur liegt, ein das Ende des Trocknens signalisierendes Signal an die Steuervorrichtung abzugeben, wobei die Auslösetemperatur einem vorab bestimmten Wert entspricht, über den die Temperatur des Objekts während seines Feuchtseins nicht ansteigt

2. System nach Anspruch 1, **dadurch gekennzeichnet, dass** das Signal eine nachfolgende Wärmebehandlung des Objekts (12) startet.

3. System nach einem der Ansprüche 1 bis 2, **dadurch gekennzeichnet, dass** die Einrichtung zum Erzeugen der Wärmenergie von einer Wärmequelle (Heizelement 50) gebildet ist, die Wärme mit einer Wellenlänge von 780 nm bis 15 µm emittiert.

4. System nach einem der Ansprüche 1 bis 3, **dadurch gekennzeichnet, dass** die Einrichtung zum Erzeugen der Wärmeenergie eine Mikrowellenquelle aufweist.

5. System nach einem der vorhergehenden Ansprüche, **dadurch gekennzeichnet, dass** die Einrichtung zum Erzeugen der Wärmeenergie von wenigstens einem Heizelement (50) eines Dentalbrennofens (26) gebildet ist, der einen Brennkammerkopf (28) und einen Brennkammerboden (30) aufweist, auf welchem das Objekt (12) abgelegt ist, wobei der Brennkammerkopf (28) zum Betrieb der Vorrichtung zum Trocknen bevorzugt um wenige Zentimeter von dem Brennkammerboden (30) beabstandet ist, oder von einer Infrarotlichtquelle (14) gebildet ist.

6. System nach einem der vorhergehenden Ansprüche, **dadurch gekennzeichnet, dass** das Temperaturerfassungselement (20) auf Strahlung mit einer Wellenlänge zwischen 780 nm und 1 mm, insbesondere zwischen 800 nm und 15 µm anspricht, und insbesondere außerhalb des mit Wärmeenergie beaufschlagten Bereichs angeordnet, jedoch auf diesen ausgerichtet ist.

7. System nach einem der vorhergehenden Ansprüche, **dadurch gekennzeichnet, dass** die Einrichtung zum Erzeugen der Wärmeenergie von wenigstens einem Heizelement (50) eines Dentalbrennofens (26) gebildet ist und das Temperaturerfassungselement (20) die Temperatur des Objekts (12) durch einen Spalt (42) hindurch erfasst, der zwischen einem Brennkammerkopf (28) und einem Brennkammerboden (30) gebildet ist, oder durch ein mit transparentem Glas abgedeckten Sichtkanal in dem Dentalbrennofen.

8. System nach einem der vorhergehenden Ansprüche, **dadurch gekennzeichnet, dass** die Vorrichtung zum Trocknen einen Lüfter oder eine Luftbeschleunigungsvorrichtung aufweist, insbesondere die Einrichtung zum Erzeugen der Wärmeenergie oberhalb des Objekts, und/oder eine Absaugvorrichtung, über welche Luftströmung über das Objekt (12) zur Unterstützung der Trocknung erzeugbar ist.

9. System nach einem der vorhergehenden Ansprüche, **dadurch gekennzeichnet, dass** das Objekt (12) als Dentalrestaurationsteil ausgebildet ist, das insbesondere eine Porosität aufweist und/oder aus einem Pulverhaufwerk besteht und insbesondere Keramik und/oder Metall und/oder Kunststoff oder Mischungen dieser Materialien aufweist.

10. System nach einem der vorhergehenden Ansprüche, **dadurch gekennzeichnet, dass** das Objekt (12) als Dentalrestaurationsteil ausgebildet ist, das ein keramischer Grünling ist, der aus keramischen Partikeln und einer festen organischen Matrix besteht, welche Matrix wiederum insbesondere mindestens eine organische Verbindung aufweist.

11. System nach einem der vorhergehenden Ansprüche, **dadurch gekennzeichnet, dass** die Steuervorrichtung (24) die Einrichtung zum Erzeugen der Wärmeenergie auf eine Temperatur regelt, die deutlich, insbesondere 30 bis 50° C, oberhalb der Siedetemperatur der Flüssigkeit ist.

12. Verfahren zum Trocknen wenigstens eines eine Flüssigkeit aufweisenden Objektes, mit einer Vorrichtung, mit einer Einrichtung (14, 50) zum Erzeugen einer auf das Objekt einwirkenden Wärmeenergie, die zur Erhöhung der Temperatur des Objekts auf die Siedetemperatur ausreicht, mit einem Beaufschlagungsbereich für die Beaufschlagung des Objekts mit Wärmeenergie, und mit einer Steuervorrichtung (24), wobei ein Temperaturerfassungselement (20) der Vorrichtung (10 die Temperatur des Objekts (12) misst und beim Erreichen einer Auslösetemperatur, die etwas oberhalb der Siedetemperatur liegt, ein das Ende des Trocknens signalisierendes Signal an die Steuervorrichtung abgibt, wobei die Auslösetemperatur einem vorab bestimmten Wert entspricht, über den die Temperatur des Objekts während seines Feuchtseins nicht ansteigt

## Claims

1. A system comprising a device for drying at least one object containing a liquid, in particular a dental restoration object (12), and comprising the object, said device comprising a means for generating thermal energy acting upon the object and sufficient for increasing the temperature of the object to the boiling temperature of the liquid, an impingement area for impinging on the object with thermal energy, and a control device (24), wherein a temperature detection element (20) of the device (10) is configured to measure the temperature of the object (12), and upon reaching a trigger temperature that is slightly above the boiling temperature to emit a signal signalizing the end of the drying process to the control device, wherein the trigger temperature corresponds to a predetermined value above which the temperature of the object does not rise in the humid state.

2. The system according to claim 1, **characterized In that** the signal initiates a subsequent thermal treatment of the object (12).

3. The system according to one of the claims 1 and 2, **characterized in that** the means for generating the thermal energy is formed by a heat source (heating element 50) that emits heat having a wavelength of 780nm to 15µm.

4. The system according to one of the claims 1 to 3, **characterized in that** the means for generating the thermal energy comprises a microwave source.

5. The system according to one of the preceding claims, **characterized In that** the means for generating the thermal energy Is formed by at least one heating element (50) of a dental firing furnace (26) that comprises a firing chamber head (28) and a firing chamber bottom (30) upon which the object (12) is placed, wherein the firing chamber head (28) for operating the drying device is preferably spaced apart from the firing chamber bottom (30) by a few centimeters, or is formed by an Infrared light source (14).

6. The system according to one of the preceding claims, **characterized in that** the temperature detection element (20) is responsive to radiation having a wavelength of between 780nm and 1mm, in particular between 800nm and 15µm, and is In particular arranged outside the area which is Impinged with thermal energy, but is directed toward it.

7. The system according to one of the preceding claims, **characterized In that** the means for generating the thermal energy is formed by at least one heating element (50) of a dental firing furnace (26) and that the temperature detection element (20) detects the temperature of the object (12) through a gap (42) formed between a firing chamber head (28) and a firing chamber bottom (30), or through a viewing channel in the dental firing furnace that is covered with transparent glass.

8. The system according to one of the preceding claims, **characterized In that** the drying device comprises a blower or an air acceleration device, in particular the means for generating the thermal energy above the object, and/or a suction device via which an air flow across the object (12) may be generated for enhancing the drying operation.

9. The system according to one of the preceding claims, **characterized in that** the object (12) is formed as a dental restoration part that In particular comprises a porosity and/or consists of a powder pile and in particular comprises ceramics and/or metal and/or plastics or mixtures of these materials.

10. The system according to one of the preceding claims, **characterized in that** the object (12) is formed as a dental restoration part that Is a ceramic green body consisting of ceramic particles and a solid organic matrix, which matrix in turn comprises in particular at least one organic compound.

11. The system according to one of the preceding claims, **characterized In that** the control device (24) controls the means for generating the thermal energy to a temperature that is clearly, in particular 30 to 50°C, above the boiling temperature of the liquid.

12. A method for drying at least one object containing a liquid with the aid of a device, said device comprising a means (14, 50) for generating thermal energy acting upon the object and sufficient for increasing the temperature of the object to the boiling temperature, an impingement area for impinging on the object with thermal energy, and a control device (24), wherein a temperature detection element (20) of the device (10) measures the temperature of the object (12), and upon reaching a trigger temperature that is slightly above the boiling temperature emits a signal signalizing the end of the drying process to the control device, wherein the trigger temperature corresponds to a predetermined value above which the temperature of the object does not rise in the humid state.

## Revendications

1. Système avec un dispositif pour le séchage au moins d'un objet présentant un fluide, en particulier un objet de restauration dentaire (12) et l'objet, où le dispositif présente un aménagement pour générer une énergie thermique agissant sur l'objet, qui est suffisante pour augmenter la température de l'objet à la température d'ébullition du liquide, une zone d'alimentation pour l'application de l'énergie thermique à l'objet et un dispositif de commande (24), où un élément de détection de la température (20) du dispositif (10) est configuré pour mesurer la température de l'objet (12) et lorsqu'une température de déclenchement légèrement au-dessus du point d'ébullition est atteinte, pour donner un signal qui indique la fin du séchage au dispositif de commande, où la température de déclenchement correspond à une valeur prédéterminée, que la température de l'objet ne dépasse pas en son état humide.

2. Système selon la revendication 1, **caractérisé en ce que** le signal démarre un traitement thermique ultérieur de l'objet (12).

3. Système selon l'une des revendications 1 ou 2, **caractérisé en ce que** l'aménagement pour générer de l'énergie thermique est formé par une source de chaleur (élément chauffant 50), qui émet de la chaleur ayant une longueur d'onde de 780 nm à 15 µm.

4. Système selon l'une des revendications 1 à 3, **caractérisé en ce que** l'aménagement pour générer de l'énergie thermique présente une source de micro-ondes.

5. Système selon l'une des revendications précédentes, **caractérisé en ce que** l'aménagement pour générer de l'énergie thermique est formé par au moins un élément chauffant (50) d'un four dentaire (26), qui présente une tête de chambre de combustion (28) et un fond de chambre de combustion (30), sur lequel est déposé l'objet (12), où, pour l'opération du dispositif pour le séchage, la tête de chambre de combustion (28) se trouve de préférence à quelques centimètres de distance du fond de chambre de combustion (30), ou est formée par une source de lumière infrarouge (14).

6. Système selon l'une des revendications précédentes, **caractérisé en ce que** l'élément de détection de la température (20) répond à la radiation ayant une longueur d'onde entre 780 nm et 1 mm, en particulier entre 800 nm et 15 µm et en particulier est disposé en dehors de la zone où est appliquée l'énergie thermique, mais dirigé vers celle-ci.

7. Système selon l'une des revendications précédentes, **caractérisé en ce que** l'aménagement pour générer de l'énergie thermique est formée à partir d'au moins un élément chauffant (50) d'un four dentaire (26) et l'élément de détection de la température (20) détecte la température de l'objet (12) à travers une fente (42) formée entre une tête de chambre de combustion (28) et un fond de chambre de combustion (30), ou par un canal de vision recouvert de verre transparent dans le four dentaire.

8. Système selon l'une des revendications précédentes, **caractérisé en ce que** le dispositif de séchage présente un ventilateur ou un appareil d'accélération de l'air, en particulier l'aménagement pour générer de l'énergie thermique au-dessus de l'objet, et/ou un dispositif d'aspiration par lequel un flux d'air sur l'objet (12) pour soutenir le séchage peut être généré.

9. Système selon l'une des revendications précédentes, **caractérisé en ce que** l'objet (12) est formé comme pièce de restauration dentaire, qui présente en particulier une porosité et/ou est composé d'un matériau en poudre et en particulier en céramique et/ou en métal et/ou en plastique ou des mélanges de ces matériaux.

10. Système selon l'une des revendications précédentes, **caractérisé en ce que** l'objet (12) est formé comme pièce restauration dentaire, qui est une ébauche en céramique, qui est composée de particules de céramique et d'une matrice organique solide, laquelle matrice présente à son tour au moins un composé organique.

11. Système selon l'une des revendications précédentes, **caractérisé en ce que** le dispositif de contrôle de la température (24) régule l'aménagement pour générer de l'énergie thermique sur une température, qui se situe clairement, en particulier 30 à 50°C, au-dessus du point d'ébullition du liquide.

12. Procédé pour sécher au moins un objet présentant un fluide, avec un dispositif avec un aménagement (14, 50) pour générer une énergie thermique agissant sur l'objet, qui suffit pour augmenter la température de l'objet à la température d'ébullition, avec une zone d'application pour appliquer de l'énergie thermique à l'objet et avec un dispositif de commande (24), avec un élément de détection de la température (20), où le dispositif (10) mesure la température de l'objet (12) et lorsqu'une température de déclenchement est atteinte, qui se trouve juste au-dessus du point d'ébullition, émet un signal au dispositif de commande qui indique la fin du séchage, où la température de déclenchement correspond à une valeur prédéterminée que la température de l'objet ne dépasse pas en son état humide.
